(19) **Europäisches Patentamt** / **European Patent Office** / **Office européen des brevets**

(11) **EP 4 376 366 B1**

(12) **EUROPEAN PATENT SPECIFICATION**

(45) Date of publication and mention
of the grant of the patent:
**22.10.2025  Bulletin 2025/43**

(21) Application number: **22861543.1**

(22) Date of filing: **07.07.2022**

(51) International Patent Classification (IPC):
*H04L 25/02* (2006.01)     *H04B 17/373* (2015.01)

(52) Cooperative Patent Classification (CPC):
**H04B 17/373; H04L 25/02; H04L 25/0224;
H04L 25/0254**

(86) International application number:
**PCT/KR2022/009832**

(87) International publication number:
**WO 2023/027329 (02.03.2023 Gazette 2023/09)**

(54) **DEVICE AND METHOD FOR CHANNEL ESTIMATION USING SHORT/LONG-TERM MEMORY NETWORK IN MILLIMETER-WAVE COMMUNICATION SYSTEM**

VORRICHTUNG UND VERFAHREN ZUR KANALSCHÄTZUNG UNTER VERWENDUNG EINES KURZ-/LANGZEITSPEICHERNETZWERKS IN EINEM MILLIMETERWELLENKOMMUNIKATIONSSYSTEM

DISPOSITIF ET PROCÉDÉ D'ESTIMATION DE CANAL UTILISANT UN RÉSEAU DE MÉMOIRE À COURT/LONG TERME DANS UN SYSTÈME DE COMMUNICATION À ONDES MILLIMÉTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2021  KR 20210112977**

(43) Date of publication of application:
**29.05.2024  Bulletin 2024/22**

(73) Proprietors:
• **Samsung Electronics Co., Ltd.
Suwon-si, Gyeonggi-do 16677 (KR)**
• **Seoul National University R&DB Foundation
Seoul 08826 (KR)**

(72) Inventors:
• **KIM, Kyeongyeon
Suwon-si, Gyeonggi-do 16677 (KR)**
• **KIM, Won Jun
Seoul 08755 (KR)**
• **KIM, Jin Hong
Seoul 05672 (KR)**
• **SHIM, Byong Hyo
Seoul 06272 (KR)**
• **AN, Yong Jun
Seoul 03936 (KR)**

(74) Representative: **HGF
HGF Limited
1 City Walk
Leeds LS11 9DX (GB)**

(56) References cited:
CN-A- 112 968 847     KR-B1- 102 067 114
KR-B1- 102 154 481

• LIAO YONG ET AL: "ChanEstNet: A Deep Learning Based Channel Estimation for High-Speed Scenarios", ICC 2019 - 2019 IEEE INTERNATIONAL CONFERENCE ON COMMUNICATIONS (ICC), IEEE, 20 May 2019 (2019-05-20), pages 1 - 6, XP033581822, DOI: 10.1109/ICC.2019.8761312
• LUO CHANGQING ET AL: "Channel State Information Prediction for 5G Wireless Communications: A Deep Learning Approach", IEEE TRANSACTIONS ON NETWORK SCIENCE AND ENGINEERING, IEEE, vol. 7, no. 1, 25 June 2018 (2018-06-25), pages 227 - 236, XP011776171, DOI: 10.1109/TNSE.2018.2848960

EP 4 376 366 B1

**(Cont. next page)**

- **LIM SUN HONG ET AL: "Deep Learning-Based Beam Tracking for Millimeter-Wave Communications Under Mobility", IEEE TRANSACTIONS ON COMMUNICATIONS, IEEE SERVICE CENTER, PISCATAWAY, NJ. USA, vol. 69, no. 11, 24 August 2021 (2021-08-24), pages 7458 - 7469, XP011888270, ISSN: 0090-6778, [retrieved on 20211116], DOI: 10.1109/ TCOMM.2021.3107526**
- **AHN YONGJUN; KIM WONJUN; SHIM BYONGHYO: "Deep Neural Network-based Joint Active User Detection and Channel Estimation for mMTC", ICC 2020 - 2020 IEEE INTERNATIONAL CONFERENCE ON COMMUNICATIONS (ICC), IEEE, 7 June 2020 (2020-06-07), pages 1 - 6, XP033798263, DOI: 10.1109/ICC40277.2020.9149252**
- **SEO, KYUNGSIK ET AL.: "Deep Learning-Based Millimeter-Wave Channel Estimation Technique and Performance Analysis", PROCEEDINGS OF 2022 KICS SUMMER CONFERENCE; JEJU ISLAND, KOREA; JUNE 22-24, 2022, KOREAN INSTITUTE OF COMMUNICATIONS AND INFORMATION SCIENCES, 31 July 2020 (2020-07-31) - 24 June 2022 (2022-06-24), pages 1323 - 1324, XP009544742**
- **LIAO YONG; HUA YUANXIAO; DAI XUEWU; YAO HAIMEI; YANG XINYI: "ChanEstNet: A Deep Learning Based Channel Estimation for High-Speed Scenarios", ICC 2019 - 2019 IEEE INTERNATIONAL CONFERENCE ON COMMUNICATIONS (ICC), IEEE, 20 May 2019 (2019-05-20), pages 1 - 6, XP033581822, DOI: 10.1109/ICC.2019.8761312**

**Description**

Technical Field

The present disclosure relates to a device and method for estimating a channel in a millimeter-wave (mmWave) communication system.

Background Art

Since a millimeter-wave (mmWave) communication system employs a high frequency band (30 gigahertz (GHz) to 300 GHz) unlike existing fourth generation long term evolution (4G LTE) systems, the propagation of mmWave communication is highly attenuated depending on the distance. To offset such a disadvantage, a beamforming scheme through a multiple input multiple output (MIMO) system using a plurality of antennas is used in the mmWave communication system. Here, a channel coefficient that needs to be estimated in the MIMO system increases in proportion to the number of antennas in a receiver and a transmitter. To use a least square method or a minimum mean square error method that is an existing channel estimation method, in the MIMO system, pilot transmission overhead occurs because at least the same number of pilots as the number of channel coefficients need to be transmitted.

To reduce the pilot transmission overhead, research is being conducted on channel estimation methods using various schemes such as compressive sensing, MUSIC, deep learning schemes, and the like.

Description of the Invention

Technical Goals

According to various embodiments disclosed in the present disclosure, a channel may be estimated from pilot signals received in units of time slots, using a long short-term memory network and a fully connected network.

Technical Solutions

According to an embodiment, a channel estimation method using a long short-term memory network includes: inputting a received pilot signal of a time slot to a long short-term memory network; extracting a time-varying channel feature embedding vector by estimating a change state of a channel by using the received pilot signal of the time slot as an input in the long short-term memory network; estimating a parameter of a channel model by using the time-varying channel feature embedding vector as an input in a fully connected network; and estimating a channel for the received pilot signal of the time slot, using the parameter of the channel model.

According to an embodiment, a long short-term memory network configured to, when a received pilot signal of a time slot is input, extract a time-varying channel feature embedding vector by estimating a change state of a channel by using the received pilot signal of the time slot as an input; a fully connected network configured to estimate a parameter of a channel model by using the time-varying channel feature embedding vector as an input; and a channel reproduction unit configured to estimate a channel for the received pilot signal of the time slot, using the parameter of the channel model are included.

According to an embodiment, a receiver includes: a coupling unit configured to obtain a received pilot signal by multiplying a combining matrix by a signal received through an antenna; a channel estimation unit configured to estimate a channel from pilot signals received in units of time slots, using a long short-term memory network and a fully connected network; an equalizer configured to correct a distortion in the pilot signals received in units of time slots; a demodulation unit configured to demodulate the corrected signal; and a decoding unit configured to decode the demodulated signal.

Effects

According to various embodiments, a device and method for estimating a channel from pilot signals received in units of time slots, using a long short-term memory network and a fully connected network are provided, and accurate parameters may be estimated in a situation in which a communication channel changes over time because a parameter of a geometric channel is estimated in a continuous domain through sequentially received pilot signals. In addition, since the parameters are estimated in a time domain instead of a frequency domain, channels for all subcarriers may be estimated using a geometric channel model and Fourier transform.

Brief Description of Drawings

FIG. 1 schematically illustrates a configuration of a receiver of a millimeter-wave (mmWave) communication system including a channel estimation device to estimate a channel using a long short-term memory network according to an embodiment.

FIG. 2 illustrates a configuration of a long short-term memory network in a channel estimation device according to an embodiment.

FIG. 3 illustrates a configuration of a fully connected network in a channel estimation device according to an embodiment.

FIG. 4 illustrates a process of estimating a channel in a channel estimation device according to an embodiment.

FIG. 5 illustrates a process of calculating a time-varying channel feature embedding vector in a long short-term memory network of a channel estimation device according to an embodiment.

Best Mode for Carrying Out the Invention

Hereinafter, embodiments will be described in detail with reference to the accompanying drawings. When describing the embodiments with reference to the accompanying drawings, like reference numerals refer to like components and a repeated description related thereto will be omitted.

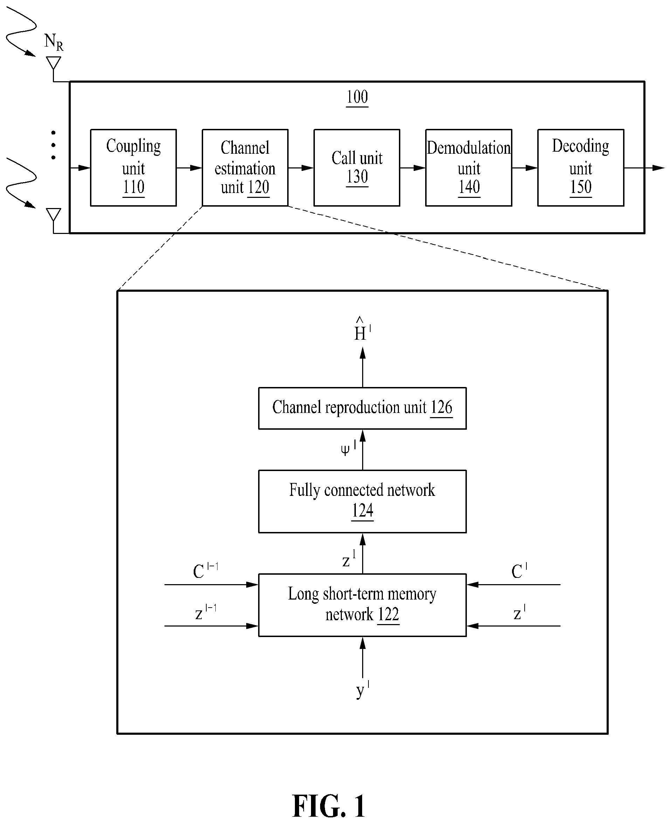

Hereinafter, a device and method for channel estimation using a long short-term memory network in a millimeter-wave (mmWave) communication system according to an embodiment of the present disclosure is described in detail with reference to FIGS. 1 to 5.

FIG. 1 schematically illustrates a configuration of a receiver of a mmWave communication system including a channel estimation device to estimate a channel using a long short-term memory network according to an embodiment.

Referring to FIG. 1, the mmWave communication system of the present disclosure may use a geometric channel model.

A receiver 100 of the mmWave communication system may be configured to include a coupling unit 110, a channel estimation unit 120, an equalizer 130, a demodulation unit 150, and a decoding unit 150.

The coupling unit 110 may obtain a received pilot signal by multiplying a combining matrix by a signal received through an antenna.

The channel estimation unit 120 may perform channel estimation from pilot signals received in units of time slots, using a long short-term memory network 122 and a fully connected network 124.

The equalizer 130 may correct a distortion in the pilot signals received in units of time slots.

The demodulation unit 140 may convert a corrected signal into a discrete signal through a demodulation process.

The decoding unit 150 may obtain accurate data transmitted by a transmitter, by performing error correction (channel decoding) on a demodulated signal and decoding the demodulated signal.

The channel estimation unit 120 may be configured to include the long short-term memory network 122, the fully connected network 124, and a channel reproduction unit 126.

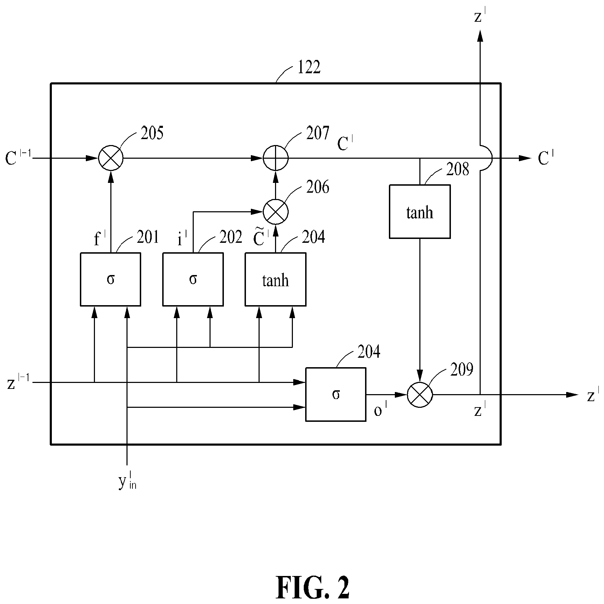

When a received pilot signal of a time slot is input, the long short-term memory network 122 may extract a time-varying channel feature embedding vector by estimating a change state of a channel by using the received pilot signal of the time slot as an input. The long short-term memory network 122 will be further described below with reference to FIG. 2.

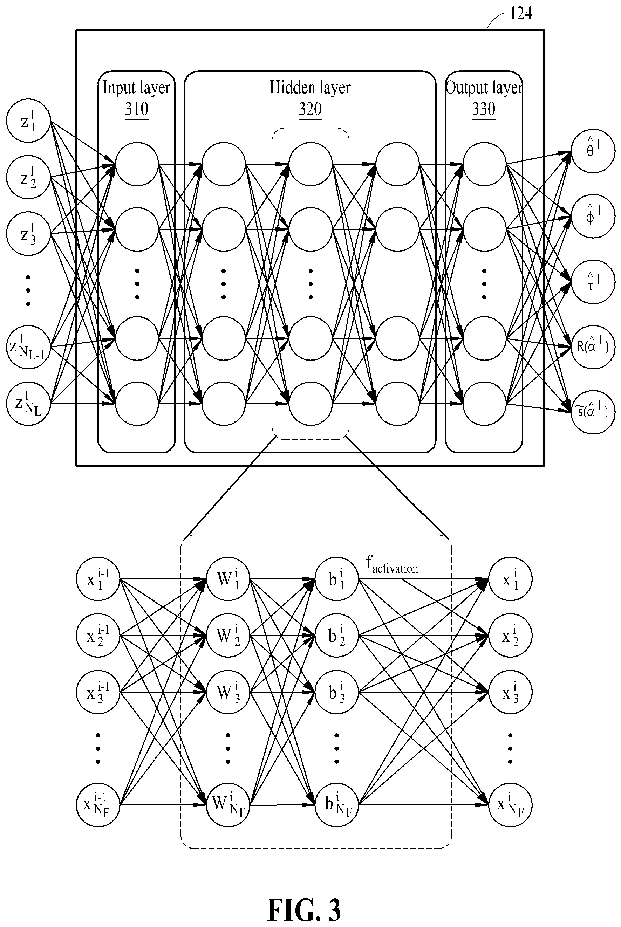

The fully connected network 124 may estimate a parameter of a channel model by using the time-varying channel feature embedding vector as an input. Here, the parameter of the channel model may include a departure angle, an arrival angle, a path delay, and a path gain. The fully connected network 124 will be further described below with reference to FIG. 3.

The channel reproduction unit 126 may estimate a channel for the received pilot signal of the time slot, using the parameter of the channel model.

The channel reproduction unit 126 may estimate a channel by applying the parameter of the channel model to Equation 1 shown below.

$$\widehat{\boldsymbol{H}}^l[k] = \sum_{i=1}^{N_p} \widehat{\alpha}_i^l \, e^{-j2\pi k f_s \widehat{\tau}_i^l} a_R\left(\widehat{\theta}_i^l\right) a_T\left(\widehat{\phi}_i^l\right)^* \qquad \dots \text{Equation 1}$$

Here, $\widehat{H}^l[k]$ denotes an estimated channel matrix of a $k$-th subcarrier, $\widehat{\alpha}_i^l$ denotes an estimated channel gain of an i-th path in an $l$-th time slot, $f_s$ denotes a spacing between subcarriers, $\widehat{\tau}_i^l$ denotes an estimated path delay of the i-th path in the *l*-th time slot, $\hat{\theta}_i^l$ denotes an estimated arrival angle of the *i*-th path in the *l*-th time slot, $\hat{\phi}_i^l$ denotes an estimated departure angle of the *i*-th path in the *l*-th time slot, $a_R(\hat{\theta}_i^l)$ denotes a steering vector for the estimated departure angle of the *i*-th path in the *l*-th time slot, and $a_T(\hat{\phi}_i^l)$ denotes a steering vector for the estimated arrival angle of the *i*-th path in the *l*-th time slot.

A process of deriving Equation 1 is described below.

A transmitter may include "$N_T$" antennas and "$N_{RF}$" RF chains, and may transmit "$M$" pilot training symbols in total. Among them, a pilot signal $s_m[k]$ may be transmitted by multiplying a *k*-th subcarrier of an m-th symbol by a pre-coding matrix $F_m$. The receiver 100 may be assumed to include "$N_R$" antennas and "$N_{RF}$" RF chains.

The receiver 100 receives a signal $r_m[k]$ obtained by adding a noise vector $v_m[k]$ and passing through a channel $H[k]$ to a pilot signal $F_m s_m[k]$ transmitted by the transmitter. Therefore, the signal $r_m[k]$ in a frequency domain received by the receiver 100 may be expressed as shown in Equation 2 below.

$$r_m[k] = H[k]F_m s_m[k] + v_m[k] \qquad \dots \text{Equation 2}$$

Here, $H[k]$ denotes a channel matrix corresponding to a *k*-th subcarrier in a frequency domain, $F_m$ denotes a precoding matrix of an *m*-th symbol, $s_m[k]$ denotes a pilot signal of the *k*-th subcarrier of the *m*-th symbol in the frequency domain, and $v_m[k]$ denotes noise of the *k*-th subcarrier of the *m*-th symbol in the frequency domain.

The coupling unit 110 of the receiver 100 may obtain a combined signal $y_m[k]$ by multiplying the received signal $r_m[k]$ by a combiner matrix $W_m$. Accordingly, a final received signal $y_m[k]$ in the frequency domain may be expressed as shown in Equation 3 below.

$$y_m[k] = W_m^* H[k]F_m s_m[k] + W_m^* v_m[k] \qquad \dots \text{Equation 3}$$

Here, $W_m^*$ denotes a transpose conjugate matrix of a combiner matrix, $H[k]$ denotes a channel matrix corresponding to a *k*-th subcarrier in a frequency domain, $F_m$ denotes a precoding matrix of an *m*-th symbol, $s_m[k]$ denotes a pilot signal of the *k*-th subcarrier of the *m*-th symbol in the frequency domain, and $v_m[k]$ denotes noise of the *k*-th subcarrier of the *m*-th symbol in the frequency domain.

In addition, if the geometric channel model is used, a channel matrix $H(\tau)$ in a time domain may be configured as shown in Equation 4 below.

$$H(\tau) = \sum_{i=1}^{N_p} \alpha_i \, \delta(t - \tau_i) a_R(\theta_i) a_T(\phi_i)^* \qquad \dots \text{Equation 4}$$

Here, $N_p$ denotes the number of channel paths, $\alpha_i$ denotes a channel gain of an *i*-th path, $\tau_i$ denotes a path delay of the *i*-th path, $\theta_i$ denotes an arrival angle of the *i*-th path, and $\phi_i$ denotes a departure angle of the *i*-th path. In addition, $a_R$ and $a_T$ denote steering vectors defined as shown in Equation 5 below.

$$a_R(\theta) = \frac{1}{\sqrt{N_R}} \left[1, e^{j\pi \sin(\theta)}, \dots, e^{j\pi(N_R - 1)\sin(\theta)}\right]^T$$

$$a_T(\phi) = \frac{1}{\sqrt{N_T}} \left[1, e^{j\pi \sin(\phi)}, \dots, e^{j\pi(N_T - 1)\sin(\phi)}\right]^T \qquad \dots \text{Equation 5}$$

The channel matrix $H(\tau)$ of the time domain through the channel matrix $H[k]$ of the *k*-th subcarrier may be calculated from Fourier transform. Accordingly, $H[k]$ may be expressed as shown in Equation 6 below.

$$H[k] = \sum_{i=1}^{N_p} \alpha_i \, e^{-j2\pi k f_s \tau_i} a_R(\theta_i) a_T(\phi_i)^* \qquad \dots \text{Equation 6}$$

Here, $H[k]$ denotes an estimated channel matrix of a *k*-th subcarrier, $\alpha_i$ denotes a channel gain of an *i*-th path, $f_s$ denotes a spacing between subcarriers, $\tau_i$ denotes a path delay of the *i*-th path, $\theta_i$ denotes an arrival angle of the *i*-th path, $\phi_i$ denotes a departure angle of the *i*-th path, $a_R(\theta_i)$ denotes a steering vector for the departure angle of the *i*-th path, and $a_T(\phi_i)$

denotes a steering vector for the arrival angle of the *i*-th path.

Therefore, Equation 1 may be derived from Equation 6.

The channel estimation unit 120 with an artificial intelligence neural network structure proposed in the present document may be trained by an Adam optimization algorithm, to minimize a loss function.

A loss function of the channel estimation unit 120 with the artificial intelligence neural network structure may be defined as shown in Equation 7 below.

$$J = \frac{1}{K} \sum_{l=1}^{L} \sum_{k=1}^{K} \left\| \boldsymbol{H}^l[k] - \widehat{\boldsymbol{H}}^l[k] \right\|_F^2 \qquad \dots \text{Equation 7}$$

Here, $\hat{H}^l[k]$ denotes a channel matrix corresponding to a *k*-th subcarrier and an estimated *l*-th time slot.

Meanwhile, since *"M"* training pilot symbols share the same parameters in a time domain, an input **y** of a long short-term memory network may be generated by concatenating them. In other words, the input **y** of the network may be expressed as shown in Equation 8 below by concatenating the *"M"* training pilot symbols.

$$\boldsymbol{y} = [\boldsymbol{y}_1^T, \boldsymbol{y}_2^T, \cdots, \boldsymbol{y}_m^T, \cdots, \boldsymbol{y}_M^T]^T \qquad \dots \text{Equation 8}$$

Here, $y_m = [y_m[0]^T, y_m[1]^T, \cdots, y_m[k]^T, \cdots y_m[K-1]^T]^T$ is satisfied, which indicates a collection of all received signals for "*K*" subcarriers in an *m*-th training symbol.

To estimate a channel that changes for a period of *L* times over time, inputs y corresponding to *L* times are called $\boldsymbol{y}^1, \boldsymbol{y}^2, \cdots, \boldsymbol{y}^l, \cdots, \boldsymbol{y}^L$ in an order. Since an *l*-th input $\boldsymbol{y}^l$ is a complex number, it may be converted into a real number and input to the long short-term memory network 122.

In other words, an input $\boldsymbol{y}_{in}$ of the long short-term memory network 122 is $\boldsymbol{y}_{in} = [\Re(\boldsymbol{y}^l), \Im(\boldsymbol{y}^l)]$, which connects a real part converted to a real number and an imaginary part.

FIG. 2 illustrates a configuration of a long short-term memory network in a channel estimation device according to an embodiment.

Referring to FIG. 2, the long short-term memory network 122 may include a forget gate $F_C$ 201, an input gate $I_C$ 202, an output gate $O_C$ 203, and hyperbolic tangents tanh 204 and 208.

The long short-term memory network 122 may calculate an output of the input gate 202 that determines a degree to which a candidate state information cell is reflected in a final state information cell based on a received pilot signal of a time slot and an output of the long short-term memory network of a previous time slot. Here, the output of the input gate 202 may be calculated as shown in Equation 9 below.

$$\mathbf{I}_C = \sigma\left(W_I \boldsymbol{y}_{in}^l + U_I \boldsymbol{z}^{l-1} + \boldsymbol{b}_I\right) \qquad \dots \text{Equation 9}$$

Here, $I_C$ denotes an output of an input gate, $\sigma$ denotes a sigmoid function, $W_I$ and $U_I$ denote weight matrices of the input gate, $b_I$ denotes a deviation of the input gate, $\boldsymbol{y}_{in}^l$ denotes an input of an *l*-th time slot, and $\boldsymbol{z}^{l-1}$ denotes an output of the long short-term memory network of an (*l*-1)-th time slot.

The long short-term memory network 122 may calculate the forget gate 201 that determines a degree to which a final state information cell of the previous time slot is reflected in the final state information cell based on the received pilot signal of the time slot and the output of the long short-term memory network of the previous time slot. Here, an output of the forget gate 201 may be calculated as shown in Equation 10 below.

$$\mathbf{F}_C = \sigma(W_F \boldsymbol{y}_{in}^l + U_F \boldsymbol{z}^{l-1} + \boldsymbol{b}_F) \qquad \dots \text{Equation 10}$$

Here, $F_C$ denotes an output of a forget gate, $\sigma$ denotes a sigmoid function, $W_F$ and $U_F$ denote weight matrices of the forget gate, $b_F$ denotes a deviation of the forget gate, $\boldsymbol{y}_{in}^l$ denotes an input of an *l*-th time slot, and $\boldsymbol{z}^{l-1}$ denotes an output of the long short-term memory network of an (*l*-1)-th time slot.

The long short-term memory network 122 may calculate an output of the output gate 203 that determines a degree to which the final state information cell is reflected in an output of the long short-term memory network based on the received pilot signal of the time slot and the output of the long short-term memory network of the previous time slot. Here, the output of the output gate 203 may be calculated as shown in Equation 11 below.

$$\mathbf{O}_{\mathrm{C}} = \sigma\big(W_O y_{\mathrm{in}}^l + U_O z^{l-1} + b_O\big) \qquad \ldots \text{Equation 11}$$

Here, $\mathbf{O}_C$ denotes an output of an output gate, $\sigma$ denotes a sigmoid function, $W_O$ and $U_O$ denote weight matrices of the output gate, $b_O$ denotes a deviation of the output gate, $y_{\mathrm{in}}^l$ denotes an input of an *l*-th time slot, and $z^{l-1}$ denotes an output of the long short-term memory network of an (*l*-1)-th time slot.

The long short-term memory network 122 may calculate the candidate state information cell based on the received pilot signal of the time slot and the output of the long short-term memory network of the previous time slot, using the hyperbolic tangent 204. Here, the candidate state information cell may be calculated as shown in Equation 12 below.

$$\tilde{\mathbf{C}} = \tanh\big(W_{\mathrm{C}} y_{\mathrm{in}}^l + U_{\mathrm{C}} z^{l-1} + b_{\mathrm{C}}\big) \qquad \ldots \text{Equation 12}$$

Here, $\tilde{\mathbf{C}}$ denotes a value of the candidate state information cell, tanh() denotes a hyperbolic tangent function, $W_C$ and $U_C$ denote weight matrices of the candidate state information cell, $b_C$ denotes a deviation of the candidate state information cell, $y_{\mathrm{in}}^l$ denotes an input of an *l*-th time slot, and $z^{l-1}$ denotes an output of the long short-term memory network of an (*l*-1)-th time slot.

The long short-term memory network 122 may calculate the final state information cell by adding, using an adder 207, a value obtained by multiplying the output of the forget gate 201 by the final state information cell of the previous time slot using a first multiplier 205 and a value obtained by multiplying the output of the input gate 202 by the candidate state information cell using a second multiplier 206. Here, the final state information cell may be calculated as shown in Equation 13 below.

$$\mathbf{C}^l = \mathbf{F}_{\mathrm{C}} \circ \mathbf{C}^{l-1} + \mathbf{I}_{\mathrm{C}} \circ \tilde{\mathbf{C}} \qquad \ldots \text{Equation 13}$$

Here, $\mathbf{C}^l$ denotes a value of the final state information cell of an *l*-th time slot, $\mathbf{F}_C$ denotes an output of a forget gate, $\mathbf{C}^{l-1}$ denotes a value of the final state information cell of an (*l* - 1)-th time slot, $\mathbf{I}_C$ denotes an output of an input gate, and $\tilde{\mathbf{C}}$ denotes a value of a candidate state information cell.

The long short-term memory network 122 may calculate and output a time-varying channel feature embedding vector by multiplying an output gate by a value obtained by applying the hyperbolic tangent 208 to the final state information cell using a third multiplier 209. Here, the time-varying channel feature embedding vector may be calculated as shown in Equation 14 below.

$$\mathbf{z}^l = \mathbf{O}_{\mathrm{C}} \circ \tanh(\mathbf{C}^l) \qquad \ldots \text{Equation 14}$$

Here, $\mathbf{z}^l$ denotes a time-varying channel feature embedding vector of an *l*-th time slot, $\mathbf{O}_C$ denotes an output of an output gate, tanh() denotes a hyperbolic tangent function, and $\mathbf{C}^l$ denotes a value of the final state information cell of an *l*-th time slot.

FIG. 3 illustrates a configuration of a fully connected network in a channel estimation device according to an embodiment.

Referring to FIG. 3, the fully connected network 124 may estimate a parameter of a channel model by matching a time-varying channel feature embedding vector $\mathbf{z}^l$ and the parameter of the channel model, using an input layer 310, at least one hidden layer 320, and an output layer 330.

The input layer 310 may function to adjust a time-varying channel feature embedding vector to a dimension of the hidden layer 320.

The input layer 310 may output a value calculated by Equation 15 shown below.

$$x^0 = f_{\mathrm{activation}}(W_0 z^l + b_0) \qquad \ldots \text{Equation 15}$$

Here, $x^0$ denotes an output of an input layer, $W_0$ denotes a weight matrix of the input layer, $b_0$ denotes a deviation of the input layer, $z^l$ denotes a time-varying channel feature embedding vector that is an output of a long short-term memory network, and $f_{activation}$ denotes an activation function.

The output $x^0$ of the input layer 310 is input to "$N_{hidden}$" hidden layers 320.

The hidden layer 320 may output a value calculated by Equation 16 shown below.

$$x^i = f_{\text{activation}}\left(\boldsymbol{W}_i x^{i-1} + \boldsymbol{b}_i\right) \qquad \ldots \text{Equation 16}$$

Here, $x^i$ denotes an output of an i-th hidden layer, $W_i$ denotes a weight of the *i*-th hidden layer, $b_i$ denotes a deviation of the *i*-th hidden layer, and $f_{activation}$ denotes an activation function used in each hidden layer.

An output $x^{Nhidden}$ passing through the hidden layer 320 with "$N_F$" dimensions in total calculates a channel parameter through an output layer that is the last layer of the fully connected network, which will be described below.

The output layer 330 may output a value calculated by Equation 17 shown below.

$$\boldsymbol{\Psi}^l = \tanh(\boldsymbol{W}_{out} x^{Nhidden} + \boldsymbol{b}_{out}) \qquad \ldots \text{Equation 17}$$

Here, $\Psi^l$ denotes a final output that yields estimates of a departure angle, an arrival angle, a path delay, and a path gain for each channel path in an *l*-th time slot, tanh() denotes a hyperbolic tangent function, $W_{out}$ denotes a weight of an output layer, $x^{Nhidden}$ denotes a final output of a hidden layer input to the output layer, and $b_{out}$ denotes a deviation of the output layer.

In other words, $\Psi^l$ corresponds to estimates $\hat{\phi}^l$, $\hat{\theta}^l$, $\hat{\tau}^l$, and $\hat{\alpha}^l$ of the departure angle, the arrival angle, the path delay, and the path gain in the *l*-th time slot. Here, the estimate $\hat{\alpha}^l$ of the path gain includes a real part $\Re(\hat{\alpha}^l)$ and an imaginary part $\Im(\alpha^l)$.

Hereinafter, a method according to the present disclosure configured as described above will be described with reference to the drawings.

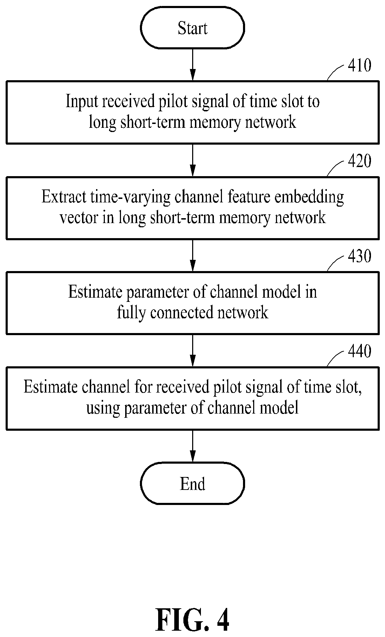

FIG. 4 illustrates a process of estimating a channel in a channel estimation device according to an embodiment.

Referring to FIG. 4, a channel estimation device inputs a received pilot signal of a time slot to a long short-term memory network in operation 510. Here, the received pilot signal of the time slot may be converted into a real number and input to the long short-term memory network.

In operation 420, the long short-term memory network of the channel estimation device may extract a time-varying channel feature embedding vector by estimating a change state of a channel by using the received pilot signal of the time slot as an input.

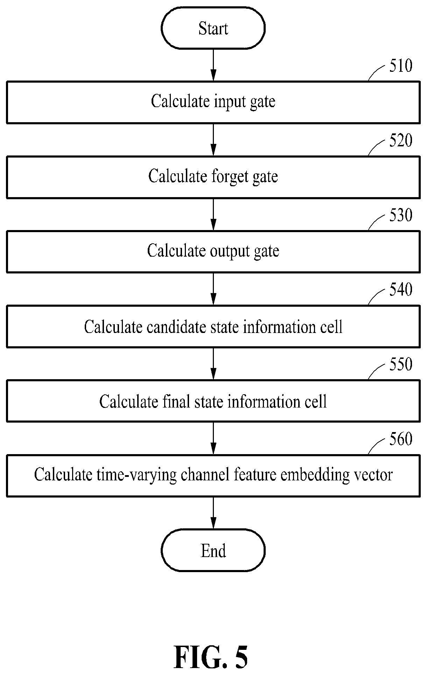

In operation 420, the long short-term memory network may extract the time-varying channel feature embedding vector, using the received pilot signal of the time slot, a final state information cell of the long short-term memory network of a previous time slot, and an output of the long short-term memory network of the previous time slot. An operation of the long short-term memory network will be further described below with reference to FIG. 5.

In operation 430, a fully connected network of the channel estimation device may estimate a parameter of a channel model by using the time-varying channel feature embedding vector as an input. Here, the parameter of the channel model may include a departure angle, an arrival angle, a path delay, and a path gain.

In operation 430, the fully connected network may estimate the parameter of the channel model by matching the time-varying channel feature embedding vector and the parameter of the channel model, using an input layer, at least one hidden layer, and an output layer.

In operation 440, the channel estimation device may estimate a channel for the received pilot signal of the time slot, using the parameter of the channel model.

In operation 440, the channel estimation device may perform estimation by applying the parameter of the channel model to Equation 1 described above.

FIG. 5 illustrates a process of calculating a time-varying channel feature embedding vector in a long short-term memory network of a channel estimation device according to an embodiment.

Referring to FIG. 5, in operation 510, the long short-term memory network may calculate an output of an input gate that determines a degree to which a candidate state information cell is reflected in a final state information cell based on a received pilot signal of a time slot and an output of the long short-term memory network of a previous time slot.

In operation 520, the long short-term memory network may calculate an output of a forget gate that determines a degree to which a final state information cell of the previous time slot is reflected in the final state information cell based on the received pilot signal of the time slot and the output of the long short-term memory network of the previous time slot.

In operation 530, the long short-term memory network may calculate an output of an output gate that determines a degree to which the final state information cell is reflected in an output of the long short-term memory network based on the received pilot signal of the time slot and the output of the long short-term memory network of the previous time slot.

In operation 540, the long short-term memory network may calculate the candidate state information cell based on the received pilot signal of the time slot and the output of the long short-term memory network of the previous time slot.

In operation 550, the long short-term memory network may calculate the final state information cell by adding a value obtained by multiplying the output of the forget gate by the final state information cell of the previous time slot and a value obtained by multiplying the output of the input gate by the candidate state information cell.

In operation 560, the long short-term memory network may calculate and output the time-varying channel feature embedding vector by multiplying the output of the output gate by a value obtained by applying a hyperbolic tangent to the final state information cell.

While the embodiments are described with reference to drawings, it will be apparent to one of ordinary skill in the art that various alterations and modifications in form and details may be made in these embodiments without departing from the scope of the claims. For example, suitable results may be achieved if the described techniques are performed in a different order and/or if components in a described system, architecture, device, or circuit are combined in a different manner and/or replaced or supplemented by other components.

**Claims**

1. A channel estimation method using a long short-term memory network, the channel estimation method comprising:

    inputting a received pilot signal of a time slot to a long short-term memory network;
    extracting a time-varying channel feature embedding vector by estimating a change state of a channel by using the received pilot signal of the time slot as an input in the long short-term memory network;
    estimating a parameter of a channel model by using the time-varying channel feature embedding vector as an input in a fully connected network; and
    estimating a channel for the received pilot signal of the time slot, using the parameter of the channel model.

2. The channel estimation method of claim 1, wherein the parameter of the channel model comprises a departure angle, an arrival angle, a path delay, and a path gain.

3. The channel estimation method of claim 1, wherein the received pilot signal of the time slot is converted into a real number and input to the long short-term memory network.

4. The channel estimation method of claim 1, wherein the extracting of the time-varying channel feature embedding vector by estimating the change state of the channel by using the received pilot signal of the time slot as the input in the long short-term memory network extracts the time-varying channel feature embedding vector using the received pilot signal of the time slot, a final state information cell of the long short-term memory network of a previous time slot, and an output of the long short-term memory network of the previous time slot in the long short-term memory network.

5. The channel estimation method of claim 1, wherein the extracting of the time-varying channel feature embedding vector by estimating the change state of the channel by using the received pilot signal of the time slot as the input in the long short-term memory network comprises:

    calculating an output of an input gate that determines a degree to which a candidate state information cell is reflected in a final state information cell based on the received pilot signal of the time slot and an output of the long short-term memory network of a previous time slot;
    calculating an output of a forget gate that determines a degree to which a final state information cell of the previous time slot is reflected in the final state information cell based on the received pilot signal of the time slot and the output of the long short-term memory network of the previous time slot;
    calculating an output of an output gate that determines a degree to which the final state information cell is reflected in an output of the long short-term memory network based on the received pilot signal of the time slot and the output of the long short-term memory network of the previous time slot;
    calculating the candidate state information cell based on the received pilot signal of the time slot and the output of the long short-term memory network of the previous time slot;
    calculating the final state information cell by adding a value obtained by multiplying the output of the forget gate by the final state information cell of the previous time slot and a value obtained by multiplying the output of the input gate by the candidate state information cell; and
    calculating and outputting the time-varying channel feature embedding vector by multiplying the output of the output gate by a value obtained by applying a hyperbolic tangent to the final state information cell.

6. The channel estimation method of claim 1, wherein the estimating of the parameter of the channel model by using the time-varying channel feature embedding vector as the input in the fully connected network comprises estimating the parameter of the channel model by matching the time-varying channel feature embedding vector and the parameter of the channel model, using an input layer, at least one hidden layer, and an output layer in the fully connected network.

7. The channel estimation method of claim 6, wherein the input layer outputs a value calculated by the following equation:

$$\mathrm{x}^0 = f_{\mathrm{activation}}(W_0 z^l + b_0)$$

in which $x^0$ denotes an output of the input layer, $W_0$ denotes a weight matrix of the input layer, $b_0$ denotes a deviation of the input layer, $z^l$ denotes the time-varying channel feature embedding vector that is an output of the long short-term memory network, and $f_{activation}$ denotes an activation function.

8. The channel estimation method of claim 6, wherein the hidden layer outputs a value calculated by the following equation:

$$x^i = f_{\mathrm{activation}}(W_i x^{i-1} + b_i)$$

in which $x^i$ denotes an output of an $i$-th hidden layer, $W_i$ denotes a weight of the $i$-th hidden layer, $b_i$ denotes a deviation of the $i$-th hidden layer, and $f_{activation}$ denotes an activation function used in each hidden layer.

9. The channel estimation method of claim 6, wherein the output layer outputs a value calculated by the following equation:

$$\Psi^l = \tanh(W_{out} x^{Nhidden} + b_{out})$$

in which $\Psi^l$ denotes a final output that yields estimates of a departure angle, an arrival angle, a path delay, and a path gain for each channel path in an $l$-th time slot, tanh() denotes a hyperbolic tangent function, $W_{out}$ denotes a weight of an output layer, $x^{Nhidden}$ denotes a final output of a hidden layer input to an output layer, and $b_{out}$ denotes a deviation of an output layer.

10. The channel estimation method of claim 1, wherein the estimating of the channel for the received pilot signal of the time slot, using the parameter of the channel model performs estimation by applying the parameter of the channel model to the following equation:

$$\hat{H}^l[k] = \sum_{i=1}^{N_p} \hat{\alpha}_i^l \, e^{-j2\pi k f_s \hat{\tau}_i^l} a_R(\hat{\theta}_i^l) a_T(\hat{\phi}_i^l)^*$$

in which $\hat{H}^l[k]$ denotes an estimated channel matrix of a $k$-th subcarrier, $\hat{\alpha}_i^l$ denotes an estimated channel gain of an $i$-th path in an $l$-th time slot, $f_s$ denotes a spacing between subcarriers, $\hat{\tau}_i^l$ denotes an estimated path delay of the $i$-th path in the $l$-th time slot, $\hat{\theta}_i^l$ denotes an estimated arrival angle of the $i$-th path in the $l$-th time slot, $\hat{\phi}_i^l$ denotes an estimated departure angle of the $i$-th path in the $l$-th time slot, $a_R(\hat{\theta}_i^l)$ denotes a steering vector for the estimated departure angle of the i-th path in the $l$-th time slot, and $a_T(\hat{\phi}_i^l)$ denotes a steering vector for the estimated arrival angle of the i-th path in the $l$-th time slot.

11. A channel estimation device using a long short-term memory network, the channel estimation device comprising:

a long short-term memory network configured to, when a received pilot signal of a time slot is input, extract a time-varying channel feature embedding vector by estimating a change state of a channel by using the received pilot signal of the time slot as an input;
a fully connected network configured to estimate a parameter of a channel model by using the time-varying channel feature embedding vector as an input; and
a channel reproduction unit configured to estimate a channel for the received pilot signal of the time slot, using the parameter of the channel model.

12. The channel estimation device of claim 11, wherein the received pilot signal of the time slot is converted into a real number and input to the long short-term memory network.

13. The channel estimation device of claim 11, wherein the long short-term memory network is configured to extract the time-varying channel feature embedding vector using the received pilot signal of the time slot, a final state information cell of the long short-term memory network of a previous time slot, and an output of the long short-term memory network of the previous time slot in the long short-term memory network.

14. The channel estimation device of claim 11, wherein the long short-term memory network is configured to:

calculate an output of an input gate that determines a degree to which a candidate state information cell is reflected in a final state information cell based on the received pilot signal of the time slot and an output of the long short-term memory network of a previous time slot;
calculate an output of a forget gate that determines a degree to which a final state information cell of the previous time slot is reflected in the final state information cell based on the received pilot signal of the time slot and the output of the long short-term memory network of the previous time slot;
calculate an output of an output gate that determines a degree to which the final state information cell is reflected in an output of the long short-term memory network based on the received pilot signal of the time slot and the output of the long short-term memory network of the previous time slot;
calculate the candidate state information cell based on the received pilot signal of the time slot and the output of the long short-term memory network of the previous time slot;
calculate the final state information cell by adding a value obtained by multiplying the output of the forget gate by the final state information cell of the previous time slot and a value obtained by multiplying the output of the input gate by the candidate state information cell; and
calculate and output the time-varying channel feature embedding vector by multiplying the output of the output gate by a value obtained by applying a hyperbolic tangent to the final state information cell.

15. The channel estimation device of claim 11, wherein the fully connected network is configured to estimate the parameter of the channel model by matching the time-varying channel feature embedding vector and the parameter of the channel model, using an input layer, at least one hidden layer, and an output layer in the fully connected network.

**Patentansprüche**

1. Kanalschätzverfahren unter Verwendung eines Lang-Kurzzeitspeichemetzwerks, wobei das Kanalschätzverfahren Folgendes umfasst:

Eingeben eines empfangenen Pilotsignals eines Zeitschlitzes in ein Lang-Kurzzeitspeichemetzwerk;
Extrahieren eines zeitvariablen Kanalmerkmal-Einbettungsvektors durch Schätzen eines Änderungszustands eines Kanals durch Verwenden des empfangenen Pilotsignals des Zeitschlitzes als eine Eingabe in das Lang-Kurzzeitspeichemetzwerk;
Schätzen eines Parameters eines Kanalmodells durch Verwenden des zeitvariablen Kanalmerkmal-Einbettungsvektors als eine Eingabe in ein vollständig verbundenes Netzwerk; und
Schätzen eines Kanals für das empfangene Pilotsignal des Zeitschlitzes unter Verwendung des Parameters des Kanalmodells.

2. Kanalschätzverfahren nach Anspruch 1, wobei der Parameter des Kanalmodells einen Ausfallswinkel, einen Einfallswinkel, eine Pfadverzögerung und eine Pfadverstärkung umfasst.

3. Kanalschätzverfahren nach Anspruch 1, wobei das empfangene Pilotsignal des Zeitschlitzes in eine reelle Zahl umgewandelt und in das Lang-Kurzzeitspeichemetzwerks eingegeben wird.

4. Kanalschätzverfahren nach Anspruch 1, wobei das Extrahieren des zeitvariablen Kanalmerkmal-Einbettungsvektors durch Schätzen des Änderungszustands des Kanals durch Verwenden des empfangenen Pilotsignals des Zeitschlitzes als die Eingabe in das Lang-Kurzzeitspeichemetzwerk den zeitvariablen Kanalmerkmal-Einbettungsvektor unter Verwendung des empfangenen Pilotsignals des Zeitschlitzes, einer Endzustandsinformationszelle des Lang-

Kurzzeitspeichernetzwerks eines vorherigen Zeitschlitzes und einer Ausgabe des Lang-Kurzzeitspeichernetzwerks des vorherigen Zeitschlitzes in dem Lang-Kurzzeitspeichernetzwerk extrahiert.

5.  Kanalschätzverfahren nach Anspruch 1, wobei das Extrahieren des zeitvariablen Kanalmerkmal-Einbettungsvektors durch Schätzen des Änderungszustands des Kanals durch Verwenden des empfangenen Pilotsignals des Zeitschlitzes als die Eingabe in das Lang-Kurzzeitspeichernetzwerk Folgendes umfasst:

    Berechnen einer Ausgabe eines Eingabegates, die einen Grad bestimmt, in dem eine Kandidatenzustandsinformationszelle in einer Endzustandsinformationszelle widergespiegelt wird, auf Grundlage des empfangenen Pilotsignals des Zeitschlitzes und einer Ausgabe des Lang-Kurzzeitspeichernetzwerks eines vorherigen Zeitschlitzes;
    Berechnen einer Ausgabe eines Forget-Gates, die einen Grad bestimmt, in dem eine Endzustandsinformationszelle des vorherigen Zeitschlitzes in der Endzustandsinformationszelle reflektiert wird, auf Grundlage des empfangenen Pilotsignals des Zeitschlitzes und der Ausgabe des Lang-Kurzzeitspeichernetzwerks des vorherigen Zeitschlitzes;
    Berechnen einer Ausgabe eines Ausgabegates, die einen Grad bestimmt, in dem die Endzustandsinformationszelle in einer Ausgabe des Lang-Kurzzeitspeichernetzwerks widergespiegelt wird, auf Grundlage des empfangenen Pilotsignals des Zeitschlitzes und der Ausgabe des Lang-Kurzzeitspeichernetzwerks des vorherigen Zeitschlitzes;
    Berechnen der Kandidatenzustandsinformationszelle auf Grundlage des empfangenen Pilotsignals des Zeitschlitzes und der Ausgabe des Lang-Kurzzeitspeichernetzwerks des vorherigen Zeitschlitzes;
    Berechnen der Endzustandsinformationszelle durch Addieren eines Wertes, der durch Multiplizieren der Ausgabe des Forget-Gates mit der Endzustandsinformationszelle des vorherigen Zeitschlitzes erhalten wird, und eines Wertes, der durch Multiplizieren der Ausgabe des Eingabegates mit der Kandidatenzustandsinformationszelle erhalten wird; und
    Berechnen und Ausgeben des zeitvariablen Kanalmerkmal-Einbettungsvektors durch Multiplizieren der Ausgabe des Ausgabegates mit einem Wert, der durch Anwenden einer hyperbolischen Tangente auf die Endzustandsinformationszelle erhalten wird.

6.  Kanalschätzverfahren nach Anspruch 1, wobei das Schätzen des Parameters des Kanalmodells durch Verwenden des zeitvariablen Kanalmerkmal-Einbettungsvektors als die Eingabe in das vollständig verbundene Netzwerk Schätzen des Parameters des Kanalmodells durch Abgleichen des zeitvariablen Kanalmerkmal-Einbettungsvektors und des Parameters des Kanalmodells unter Verwendung einer Eingabeschicht, mindestens einer verborgenen Schicht und einer Ausgabeschicht in dem vollständig verbundenen Netzwerk umfasst.

7.  Kanalschätzverfahren nach Anspruch 6, wobei die Eingabeschicht einen Wert ausgibt, der durch die folgende Gleichung berechnet wird:

$$\mathrm{x}^0 = f_{\mathrm{activation}}(W_0 z^l + b_0) \,,$$

in der $x^0$ eine Ausgabe der Eingabeschicht bezeichnet, $W_0$ eine Gewichtsmatrix der Eingabeschicht bezeichnet, $b_0$ eine Abweichung der Eingabeschicht bezeichnet, $z^l$ den zeitvariablen Kanalmerkmal-Einbettungsvektor bezeichnet, der eine Ausgabe des Lang-Kurzzeitspeichernetzwerks ist, und $f_{activation}$ eine Aktivierungsfunktion bezeichnet.

8.  Kanalschätzverfahren nach Anspruch 6, wobei die verborgene Schicht einen Wert ausgibt, der durch die folgende Gleichung berechnet wird:

$$x^i = f_{\mathrm{activation}}\big(W_i x^{i-1} + b_i\big) \,,$$

in der $x^i$ eine Ausgabe einer $i$-ten verborgenen Schicht bezeichnet, $W_i$ eine Gewichtung der $i$-ten verborgenen Schicht bezeichnet, $b_i$ eine Abweichung der $i$-ten verborgenen Schicht bezeichnet und $f_{\mathrm{activation}}$ eine Aktivierungsfunktion bezeichnet, die in jeder verborgenen Schicht verwendet wird.

9.  Kanalschätzverfahren nach Anspruch 6, wobei die Ausgabeschicht einen Wert ausgibt, der durch die folgende Gleichung berechnet wird:

$$\Psi^l = \tanh(W_{out}x^{Nhidden} + b_{out})\,,$$

in der $\Psi^l$ eine Endausgabe bezeichnet, die Schätzungen eines Ausfallswinkels, eines Einfallswinkels, einer Pfadverzögerung und einer Pfadverstärkung für jeden Kanalpfad in einem *l*-ten Zeitschlitz ergibt, tanh() eine hyperbolische Tangensfunktion bezeichnet, $W_{out}$ eine Gewichtung einer Ausgabeschicht bezeichnet, $x^{Nhidden}$ eine Endausgabe einer Eingabe einer verborgenen Schicht an eine Ausgabeschicht bezeichnet und $b_{out}$ eine Abweichung einer Ausgabeschicht bezeichnet.

10. Kanalschätzverfahren nach Anspruch 1, wobei das Schätzen des Kanals für das empfangene Pilotsignal des Zeitschlitzes unter Verwendung des Parameters des Kanalmodells eine Schätzung durch Anwenden des Parameters des Kanalmodells auf die folgende Gleichung durchführt:

$$\hat{H}^l[k] = \sum_{i=1}^{N_p} \hat{\alpha}_i^l\, e^{-j2\pi k f_s \hat{\tau}_i^l} a_R(\hat{\theta}_i^l) a_T(\hat{\phi}_i^l)^\circ \,,$$

in der $\hat{H}^l[k]$ eine geschätzte Kanalmatrix eines k-ten Unterträgers bezeichnet, $\hat{\alpha}_i^l$ eine geschätzte Kanalverstärkung eines *i*-ten Pfades in einem *l*-ten Zeitschlitz bezeichnet, $f_s$ einen Abstand zwischen Unterträgern bezeichnet, $\hat{\tau}_i^l$ eine geschätzte Pfadverzögerung des *i*-ten Pfades in dem *l*-ten Zeitschlitz bezeichnet, $\hat{\theta}_i^l$ einen geschätzten Einfallswinkel des *i*-ten Pfades in dem *l*-ten Zeitschlitz bezeichnet, $\hat{\phi}_i^l$ einen geschätzten Ausfallswinkel des *i*-ten Pfades in dem *l*-ten Zeitschlitz bezeichnet, $a_R(\hat{\theta}_i^l)$ einen Lenkvektor für den geschätzten Ausfallswinkel des *i*-ten Pfades in dem *l*-ten Zeitschlitz bezeichnet und $a_T(\hat{\phi}_i^l)$ einen Lenkvektor für den geschätzter Einfallswinkel des *i*-ten Pfades in dem *l*-ten Zeitschlitz bezeichnet.

11. Kanalschätzvorrichtung, die ein Lang-Kurzzeitspeichernetzwerk verwendet, wobei die Kanalschätzvorrichtung Folgendes umfasst:

ein Lang-Kurzzeitspeichemetzwerk, das dazu konfiguriert ist, wenn ein empfangenes Pilotsignal eines Zeitschlitzes eingegeben wird, einen zeitvariablen Kanalmerkmal-Einbettungsvektor durch Schätzen eines Änderungszustands eines Kanals durch Verwenden des empfangenen Pilotsignals des Zeitschlitzes als eine Eingabe zu extrahieren;
ein vollständig verbundenes Netzwerk, das dazu konfiguriert ist, einen Parameter eines Kanalmodells durch Verwenden des zeitvariablen Kanalmerkmal-Einbettungsvektors als eine Eingabe zu schätzen; und
eine Kanalwiedergabeeinheit, die dazu konfiguriert ist, einen Kanal für das empfangene Pilotsignal des Zeitschlitzes unter Verwendung des Parameters des Kanalmodells zu schätzen.

12. Kanalschätzvorrichtung nach Anspruch 11, wobei das empfangene Pilotsignal des Zeitschlitzes in eine reelle Zahl umgewandelt und in das Lang-Kurzzeitspeichemetzwerks eingegeben wird.

13. Kanalschätzvorrichtung nach Anspruch 11, wobei das Lang-Kurzzeitspeichernetzwerk dazu konfiguriert ist, den zeitvariablen Kanalmerkmal-Einbettungsvektor unter Verwendung des empfangenen Pilotsignals des Zeitschlitzes, einer Endzustandsinformationszelle des Lang-Kurzzeitspeichemetzwerks eines vorherigen Zeitschlitzes und einer Ausgabe des Lang-Kurzzeitspeichemetzwerks des vorherigen Zeitschlitzes in dem Lang-Kurzzeitspeichemetzwerk zu extrahieren.

14. Kanalschätzvorrichtung nach Anspruch 11, wobei das Lang-Kurzzeitspeichemetzwerk zu Folgendem konfiguriert ist:

Berechnen einer Ausgabe eines Eingabegates, die einen Grad bestimmt, in dem eine Kandidatenzustandsinformationszelle in einer Endzustandsinformationszelle widergespiegelt wird, auf Grundlage des empfangenen Pilotsignals des Zeitschlitzes und einer Ausgabe des Lang-Kurzzeitspeichemetzwerks eines vorherigen Zeitschlitzes;

Berechnen einer Ausgabe eines Forget-Gates, die einen Grad bestimmt, in dem eine Endzustandsinformationszelle des vorherigen Zeitschlitzes in der Endzustandsinformationszelle reflektiert wird, auf Grundlage des empfangenen Pilotsignals des Zeitschlitzes und der Ausgabe des Lang-Kurzzeitspeichemetzwerks des vorherigen Zeitschlitzes;

Berechnen einer Ausgabe eines Ausgabegates, die einen Grad bestimmt, in dem die Endzustandsinformationszelle in einer Ausgabe des Lang-Kurzzeitspeichemetzwerks widergespiegelt wird, auf Grundlage des empfangenen Pilotsignals des Zeitschlitzes und der Ausgabe des Lang-Kurzzeitspeichemetzwerks des vorherigen Zeitschlitzes;

Berechnen der Kandidatenzustandsinformationszelle auf Grundlage des empfangenen Pilotsignals des Zeitschlitzes und der Ausgabe des Lang-Kurzzeitspeichernetzwerks des vorherigen Zeitschlitzes;

Berechnen der Endzustandsinformationszelle durch Addieren eines Wertes, der durch Multiplizieren der Ausgabe des Forget-Gate mit der Endzustandsinformationszelle des vorherigen Zeitschlitzes erhalten wird, und eines Wertes, der durch Multiplizieren der Ausgabe des Eingabegates mit der Kandidatenzustandsinformationszelle erhalten wird; und

Berechnen und Ausgeben des zeitvariablen Kanalmerkmal-Einbettungsvektors durch Multiplizieren der Ausgabe des Ausgabegates mit einem Wert, der durch Anwenden einer hyperbolischen Tangente an die Endzustandsinformationszelle erhalten wird.

15. Kanalschätzvorrichtung nach Anspruch 11, wobei das vollständig verbundene Netzwerk dazu konfiguriert ist, den Parameter des Kanalmodells durch Abgleichen des zeitvariablen Kanalmerkmal-Einbettungsvektors und des Parameters des Kanalmodells unter Verwendung einer Eingabeschicht, mindestens einer verborgenen Schicht und einer Ausgabeschicht in dem vollständig verbundenen Netzwerk zu schätzen.

## Revendications

1. Procédé d'estimation de canal utilisant un réseau à mémoire à long et court terme, le procédé d'estimation de canal comprenant :

   l'entrée d'un signal pilote reçu d'un créneau temporel dans un réseau à mémoire à long et court terme ;
   l'extraction d'un vecteur d'intégration de caractéristique de canal variant dans le temps en estimant un état de changement d'un canal en utilisant le signal pilote reçu du créneau temporel comme entrée dans le réseau à mémoire à long et court terme ;
   l'estimation d'un paramètre d'un modèle de canal en utilisant le vecteur d'intégration de caractéristique de canal variant dans le temps comme entrée dans un réseau entièrement connecté ; et
   l'estimation d'un canal pour le signal pilote reçu du créneau temporel, en utilisant le paramètre du modèle de canal.

2. Procédé d'estimation de canal de la revendication 1, dans lequel le paramètre du modèle de canal comprend un angle de départ, un angle d'arrivée, un retard de trajet et un gain de trajet.

3. Procédé d'estimation de canal de la revendication 1, dans lequel le signal pilote reçu du créneau temporel est converti en un nombre réel et entré dans le réseau à mémoire à long et court terme.

4. Procédé d'estimation de canal de la revendication 1, dans lequel l'extraction du vecteur d'intégration de caractéristique de canal variant dans le temps en estimant l'état de changement du canal en utilisant le signal pilote reçu du créneau temporel comme entrée dans le réseau à mémoire à long et court terme extrait le vecteur d'intégration de caractéristique de canal variant dans le temps en utilisant le signal pilote reçu du créneau temporel, une cellule d'informations d'état final du réseau à mémoire à long et court terme d'un créneau temporel précédent, et une sortie du réseau à mémoire à long et court terme du créneau temporel précédent dans le réseau à mémoire à long et court terme.

5. Procédé d'estimation de canal de la revendication 1, dans lequel l'extraction du vecteur d'intégration de caractéristique de canal variant dans le temps en estimant l'état de changement du canal en utilisant le signal pilote reçu du créneau temporel comme entrée dans le réseau à mémoire à long et court terme comprend :

le calcul d'une sortie d'un portail d'entrée qui détermine un degré auquel une cellule d'informations d'état candidat est réfléchie dans une cellule d'informations d'état final sur la base du signal pilote reçu du créneau temporel et d'une sortie du réseau à mémoire à long et court terme d'un créneau temporel précédent ;

le calcul d'une sortie d'un portail d'oubli qui détermine un degré auquel une cellule d'informations d'état final du créneau temporel précédent est réfléchie dans la cellule d'informations d'état final sur la base du signal pilote reçu du créneau temporel et de la sortie du réseau à mémoire à long et court terme du créneau temporel précédent ;

le calcul d'une sortie d'un portail de sortie qui détermine un degré auquel la cellule d'informations d'état final est réfléchie dans une sortie du réseau à mémoire à long et court terme sur la base du signal pilote reçu du créneau temporel et de la sortie du réseau à mémoire à long et court terme du créneau temporel précédent ;

le calcul de la cellule d'informations d'état candidat sur la base du signal pilote reçu du créneau temporel et de la sortie du réseau à mémoire à long et court terme du créneau temporel précédent ;

le calcul de la cellule d'informations d'état final en ajoutant une valeur obtenue en multipliant la sortie du portail d'oubli par la cellule d'informations d'état final du créneau temporel précédent et une valeur obtenue en multipliant la sortie du portail d'entrée par la cellule d'informations d'état candidat ; et

le calcul et l'émission en sortie du vecteur d'intégration de caractéristique de canal variant dans le temps en multipliant la sortie du portail de sortie par une valeur obtenue en appliquant une tangente hyperbolique à la cellule d'informations d'état final.

6. Procédé d'estimation de canal de la revendication 1, dans lequel l'estimation du paramètre du modèle de canal en utilisant le vecteur d'intégration de caractéristique de canal variant dans le temps comme entrée dans le réseau entièrement connecté comprend l'estimation du paramètre du modèle de canal en faisant correspondre le vecteur d'intégration de caractéristique de canal variant dans le temps et le paramètre du modèle de canal, en utilisant une couche d'entrée, au moins une couche cachée et une couche de sortie dans le réseau entièrement connecté.

7. Procédé d'estimation de canal de la revendication 6, dans lequel la couche d'entrée émet en sortie une valeur calculée par l'équation suivante :

$$\mathrm{x}^0 = f_{\mathrm{activation}}(W_0 z^l + b_0)$$

où $x^0$ désigne une sortie de la couche d'entrée, $W_0$ désigne une matrice de pondération de la couche d'entrée, $b_0$ désigne une déviation de la couche d'entrée, $z^l$ désigne le vecteur d'intégration de caractéristique de canal variant dans le temps qui est une sortie du réseau à mémoire à long et court terme, et $f_{activation}$ désigne une fonction d'activation.

8. Procédé d'estimation de canal de la revendication 6, dans lequel la couche cachée émet en sortie une valeur calculée par l'équation suivante :

$$x^i = f_{\mathrm{activation}}\left(W_i x^{i-1} + b_i\right)$$

où $x^i$ désigne une sortie d'une $i^e$ couche cachée, $W_i$ désigne une pondération de la $i^e$ couche cachée, $b_i$ désigne une déviation de la $i^e$ couche cachée, et $f_{\mathrm{activation}}$ désigne une fonction d'activation utilisée dans chaque couche cachée.

9. Procédé d'estimation de canal de la revendication 6, dans lequel la couche de sortie émet en sortie une valeur calculée par l'équation suivante :

$$\Psi^l = \tanh(W_{out} x^{Nhidden} + b_{out})$$

où $\Psi^l$ désigne une sortie finale qui donne des estimations d'un angle de départ, d'un angle d'arrivée, d'un retard de trajet et d'un gain de trajet pour chaque trajet de canal dans un $l^e$ créneau temporel, $\tanh()$ désigne une fonction tangente hyperbolique, $W_{out}$ désigne un poids d'une couche de sortie, $x^{Nhidden}$ désigne une sortie finale d'une entrée de couche cachée vers une couche de sortie, et $b_{out}$ désigne une déviation d'une couche de sortie.

10. Procédé d'estimation de canal de la revendication 1, dans lequel l'estimation du canal pour le signal pilote reçu du créneau temporel, en utilisant le paramètre du modèle de canal, réalise une estimation en appliquant le paramètre du modèle de canal à l'équation suivante :

$$\hat{H}^l[k] = \sum_{i=1}^{N_P} \hat{\alpha}_i^l \, e^{-j2\pi k f_s \hat{\tau}_i^l} a_R(\hat{\theta}_i^l) a_T(\hat{\phi}_i^l)^*$$

où $\hat{H}^l[k]$ désigne une matrice de canal estimée d'une $k$e sous-porteuse, $\hat{\alpha}_i^l$ désigne un gain de canal estimé d'un $i$e trajet dans un $l$e créneau temporel, $f_s$ désigne un espacement entre sous-porteuses, $\hat{\tau}_i^l$ désigne un retard de trajet estimé du $i$e trajet dans le $l$e créneau temporel, $\hat{\theta}_i^l$ désigne un angle d'arrivée estimé du $i$e trajet dans le $l$e créneau temporel, $\hat{\phi}_i^l$ désigne un angle de départ estimé du $i$e trajet dans le $l$e créneau temporel, $a_R(\hat{\theta}_i^l)$ désigne un vecteur d'orientation pour l'angle de départ estimé du $i$e trajet dans le $l$e créneau temporel, et $a_T(\hat{\phi}_i^l)$ désigne un vecteur d'orientation pour l'angle d'arrivée estimé du $i$e trajet dans le $l$e créneau temporel.

11. Dispositif d'estimation de canal utilisant un réseau à mémoire à long et court terme, le dispositif d'estimation de canal comprenant :

    un réseau à mémoire à long et court terme configuré pour, lorsqu'un signal pilote reçu d'un créneau temporel est entré, extraire un vecteur d'intégration de caractéristique de canal variant dans le temps en estimant un état de changement d'un canal en utilisant le signal pilote reçu du créneau temporel comme entrée ;
    un réseau entièrement connecté configuré pour estimer un paramètre d'un modèle de canal en utilisant le vecteur d'intégration de caractéristique de canal variant dans le temps comme entrée ; et
    une unité de reproduction de canal configurée pour estimer un canal pour le signal pilote reçu du créneau temporel, en utilisant le paramètre du modèle de canal.

12. Dispositif d'estimation de canal de la revendication 11, dans lequel le signal pilote reçu du créneau temporel est converti en un nombre réel et entré dans le réseau à mémoire à long et court terme.

13. Dispositif d'estimation de canal de la revendication 11, dans lequel le réseau à mémoire à long et court terme est configuré pour extraire le vecteur d'intégration de caractéristique de canal variant dans le temps en utilisant le signal pilote reçu du créneau temporel, une cellule d'informations d'état final du réseau à mémoire à long et court terme d'un créneau temporel précédent, et une sortie du réseau à mémoire à long et court terme du créneau temporel précédent dans le réseau à mémoire à long et court terme.

14. Dispositif d'estimation de canal de la revendication 11, dans lequel le réseau à mémoire à long et court terme est configuré pour :

    calculer une sortie d'un portail d'entrée qui détermine un degré auquel une cellule d'informations d'état candidat est réfléchie dans une cellule d'informations d'état final sur la base du signal pilote reçu du créneau temporel et d'une sortie du réseau à mémoire à long et court terme d'un créneau temporel précédent ;
    calculer une sortie d'un portail d'oubli qui détermine un degré auquel une cellule d'informations d'état final du créneau temporel précédent est réfléchie dans la cellule d'informations d'état final sur la base du signal pilote reçu du créneau temporel et de la sortie du réseau à mémoire à long et court terme du créneau temporel précédent ;
    calculer une sortie d'un portail de sortie qui détermine un degré auquel la cellule d'informations d'état final est réfléchie dans une sortie du réseau à mémoire à long et court terme sur la base du signal pilote reçu du créneau temporel et de la sortie du réseau à mémoire à long et court terme du créneau temporel précédent ;
    calculer la cellule d'informations d'état candidat sur la base du signal pilote reçu du créneau temporel et de la sortie du réseau à mémoire à long et court terme du créneau temporel précédent ;
    calculer la cellule d'informations d'état final en ajoutant une valeur obtenue en multipliant la sortie du portail d'oubli par la cellule d'informations d'état final du créneau temporel précédent et une valeur obtenue en multipliant la sortie du portail d'entrée par la cellule d'informations d'état candidat ; et
    calculer et émettre en sortie le vecteur d'intégration de caractéristique de canal variant dans le temps en multipliant la sortie du portail de sortie par une valeur obtenue en appliquant une tangente hyperbolique à la cellule d'informations d'état final.

**15.** Dispositif d'estimation de canal de la revendication 11, dans lequel le réseau entièrement connecté est configuré pour estimer le paramètre du modèle de canal en faisant correspondre le vecteur d'intégration de caractéristique de canal variant dans le temps et le paramètre du modèle de canal, en utilisant une couche d'entrée, au moins une couche cachée et une couche de sortie dans le réseau entièrement connecté.

**FIG. 1**

**FIG. 2**

**FIG. 3**

Start

410
Input received pilot signal of time slot to
long short-term memory network

420
Extract time-varying channel feature embedding
vector in long short-term memory network

430
Estimate parameter of channel model in
fully connected network

440
Estimate channel for received pilot signal of time slot,
using parameter of channel model

End

# FIG. 4

Start

Calculate input gate _ 510

Calculate forget gate _ 520

Calculate output gate _ 530

Calculate candidate state information cell _ 540

Calculate final state information cell _ 550

Calculate time-varying channel feature embedding vector _ 560

End

# FIG. 5